# EUROPEAN PATENT SPECIFICATION

(11) **EP 1 341 627 B1**
(45) Date of publication and mention of the grant of the patent: **02.06.2004**
(21) Application number: 01999448.2
(22) Date of filing: 06.12.2001
(51) Int. Cl.: B22C 9/06

(54) **PROCESS FOR THE MANUFACTURING OF MOLDS**
VERFAHREN ZUR HERSTELLUNG VON GUSSFORMEN
PROCEDE DE FABRICATION DE MOULES

(30) Priority: 06.12.2000 IT RM20000644
(43) Date of publication of application: 10.09.2003
(73) Proprietor: CENTRO SVILUPPO MATERIALI S.p.A., 00129 Roma (IT); Microcast S.R.L., 27036 Mortara PV (IT)
(72) Inventor: POCCI, Dante, c/o Centro Sviluppo Materiali S.p.A., I-00129 Rome (IT); TACCARDO, Dino, c/o Microcast S.r.l., I-27036 Mortara PV (IT)
(74) Representative: Leone, Mario
(86) International application number: PCT/IT2001/000618
(87) International publication number: WO 2002/045884

(56) References cited:
- DE-C- 435 917
- FR-A- 1 012 469
- GB-A- 591 329

## Description

The present invention relates to a process for the manufacturing of molds, of a type apt to be employed in the field of precision casting, die casting, injection molding and other alike shell casting processes.

As it is known, said molds are employed in the production of investment patterns, e.g., made of wax in the so-called lost-wax technique, to be employed in said casting techniques. The investment pattern is placed in a shell of refractory material wherein molten metal is poured or injected which melts and replaces the material of the former.

The known techniques and processes for the manufacturing of molds have to meet several demands, like, e.g., that of enabling the manufacturing of molds yielding investment patterns, and subsequently manufacts, true to the utmost to the original pattern.

Moreover, the mold should be employed for an adequate number of castings, keeping its performances unaltered to the utmost.

Further, the process should be simple and capable of adapting to the rapid prototyping techniques wherewith it is employed, also in order to prevent the total cost of the manufact from soaring.

The technical problem underlying the present invention is to provide a process meeting said demands in the most satisfactorily way.

This problem is solved by a process for the manufacturing of molds for precision casting, die casting and the like according to claim 1. In general, the process comprises the steps of:
* providing a die holder cavity apt to receive a main pattern, made by rapid prototyping techniques, from which a mold is to be obtained;
* placing said main pattern, provided with spacers, in said cavity;
* casting a low-melting alloy, consisting of a Tin-Bismuth alloy, in said cavity, allowing the casting harden; and
* removing a mold to be employed for obtaining investment patterns.

For 'low-melting alloy' is meant a Tin-Bismuth alloy, hereinafter referred to as Sn-Bi alloy, having a melting point temperature lower than 400°C, and for investment patterns, patterns, generally called secondary patterns, are obtained by casting into the mold thus manufactured, employing as material a ready-melting material like natural or synthetic wax, a thermoplastic material like polystyrene, frozen mercury, hardened urea etc., are meant.

In a more detailed definition, the process according to the invention comprises the steps of:
* making a main pattern by a rapid prototyping technique;
* providing a pair of die holder cavities apt to receive, when overlapped, said main pattern;
* placing, in a first die holder cavity of said pair of cavities, said main pattern provided with suitable spacers;
* casting, in said first cavity, a quantity of an easily removable material and inducing the hardening thereof;
* overlapping said second cavity to said first cavity and casting, into the resulting space, a low-melting alloy, consisting of a Tin-Bismuth alloy, inducing the hardening thereof;
* separating said first and second cavity, removing said easily removable material, treating the exposed surfaces of the hardened alloy with a release agent and overlapping again said cavities therebetween;
* casting, into the resulting space, low-melting alloy and inducing the hardening thereof; and
* separating said die holder cavities and removing a pair of mold shells therefrom.

The main advantage of the process according to the present invention lies in allowing the attainment of molds capable of optimum performances.

The present invention will hereinafter be disclosed according to a preferred embodiment thereof, given by way of example and without limitative purposes with reference to the photographic representations and to the annexed drawings, wherein:
* Fig. 1 shows two photographic representations of a master pattern in two sections of a nozzle, made by stereolitography;
* Fig. 2 shows two photographic representations of the main patterns of the inside and of the outside of a cryogenic valve;

The abovecited patterns have been made in order to reproduce the patterns with precision casting techniques;

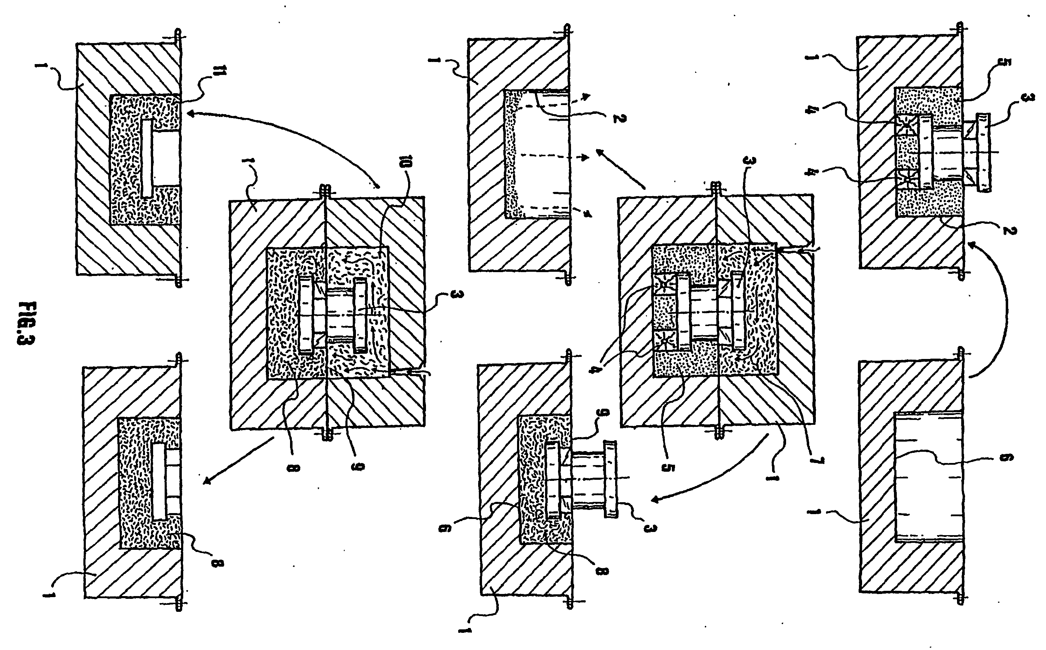

* Fig. 3 is a schematic representation of the main steps of the process according to the invention, with reference to the nozzle pattern of Fig. 1;
* Fig. 4 is a block diagram illustrating the main steps of the process according to the invention;
* Fig. 5 is a photographic representation of a two-section wax pattern of the nozzle of Fig. 1; and
* Fig. 6 is a photographic representation of a wax pattern of the inside of the valve of Fig. 2.

The manufacturing of molds to be employed in precision casting techniques starts with the provision of a main or primary pattern, also called master pattern, by a rapid prototyping technique.

Techniques like, e.g., stereolitography and synthetic powder sintering may be resorted to. Both techniques employ a laser combined with a specific CAD-type software.

Stereolitography allows to attain solid structures particularly suitable to the manufacturing of molds by the process according to the invention.

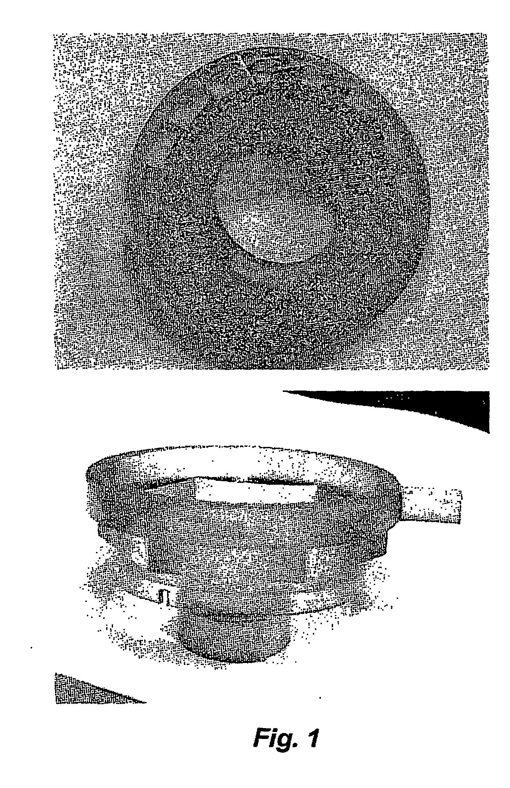

In Fig. 1 a master pattern of a nozzle made, by stereolitography techniques, of epoxy resin is shown. The nozzle pattern is made in two sections in order to carry out all the forming steps of a mold.

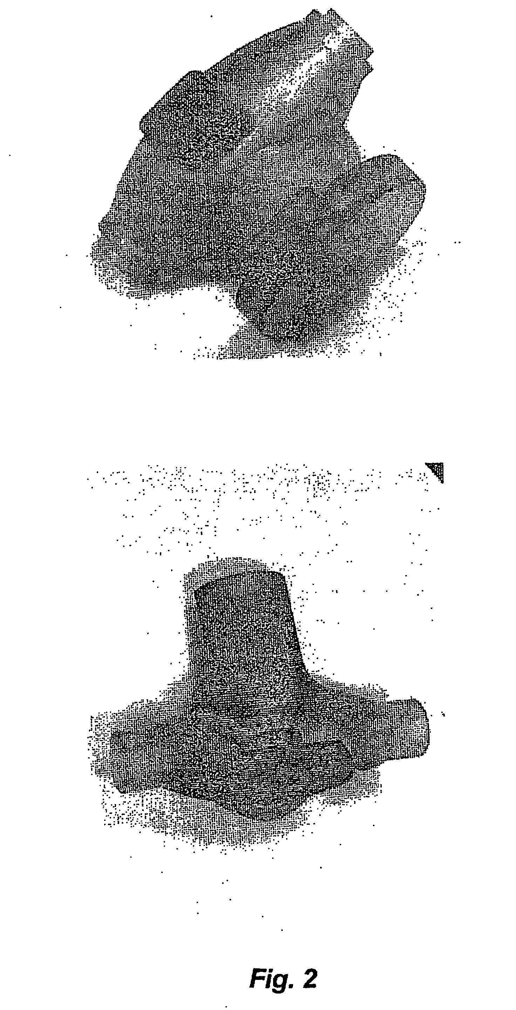

In Fig. 2 a pair of inside-outside master patterns of a cryogenic valve, always made by stereolitography using an epoxy resin, is shown.

The patterns of Figs. 1 and 2 are illustrative of what may constitute the starting element of the process according to the invention, the description of an embodiment thereof being given hereinafter.

A resin suitable for the manufacturing of the master pattern is the SL 5170 type (Cibatool®), however other resins may be employed, e.g., UV-sensitive photopolymers. The demands to be met by the resin are basically those related to the possible use thereof in the field of stereolitography, hence the resin may be of epoxy or acrylic type, on condition that the end master pattern have a satisfactory dampness- and heat-resistance.

The physical properties of the resins employed in the field of stereolitography vary by machine, hence being difficult to pinpoint. Therefore, generally speaking and for reference only, there may be indicated: a density, measured at 25°C, ranging from 1.1 to 1.2 g/cm³; a glass transition temperature, measured according to DMA, 4°C/min, of at least 50°C; a heat deflection temperature, measured according to ASTM D 648, at 0.46 MPa, of at least 40°C.

Moreover, considering the finished pattern, it should be tested whether it has a hardness acceptable for the subsequent mold manufacturing steps, and this value should be lower than 50 Shore D.

Finally, our manufactured master pattern should meet dimensional (as well as geometrical) tolerance values expressed as:
± 0.7% of the nominal size, for >15 mm reference heights; and
± 0.10 mm for <15 mm reference heights.

The epoxy resin employed enables an optimum performance.

Alternatively, a different resin, e.g., an acrylic one may also be used.

Upon providing the master pattern, two aluminium alloy hemiblocks 1, functioning as die holder cavities as being provided with a groove apt to house a master pattern as abovedescribed, are prepared.

In a first one of said cavities, indicated with 2, a master pattern 3 is housed by suitable spacers and stoppers 4, then plaster 5 which, in the present embodiment, consists of a material comparatively easily removable during the process, is cast therein. To this end, it should be pointed out that plaster is a low-cost and easy to find material, employed in foundry techniques since the dawn of history.

The solidification of the plaster 5 is induced, thereby enabling manual and/or machine finishings to be carried out, in order to define the so-called separation line.

The second one of said die holder cavities, indicated with 6, is overlapped to and clamped onto the first cavity 2. Since the second cavity 6 has not been filled up with plaster, an empty space results, wherein a first quantity 7 of Sn-Bi low-melting alloy having a <400°C melting point is cast.

The eutectic composition of the Sn-Bi alloy which is optimum for the process has the 57% of Bi and a melting (eutectic) point of about 139°C.

The preferred composition provides a quantity of Tin ranging from 30 to 55% by weight, and a quantity of Bismuth ranging from 70 to 45% by weight, with a casting temperature ranging from 155 to about 200°C.

The solidification, the hardening of the abovementioned alloy is induced, and, as soon as possible, the two hemiblocks 1, i.e. the cavities 2, 6, are separated. The plaster 5 of the first cavity 2 is disposed of. The master pattern 3 is suitably removed in order to enable the subsequent workings.

Then, a first shell 8 derived from the solidification of the alloy is finished with the separation line, and subsequently the master pattern 3 is replaced in its original position.

The exposed surfaces 9 of the first shell 8 are treated with a release agent, in order to enable the first shell 8 and the second shell which will be formed to be separated therebetween. A commonly employable release agent is quartz powder.

The first cavity 2, emptied and cleaned of the plaster, is overlapped to and clamped again. In the empty space deriving from the disposal of the plaster 5 a second quantity 10 of said Sn-Bi alloy is cast.

Upon having induced the solidification of the latter, a second shell 11 is formed. The cavities 2, 6 are definitively separated and the two shells 8, 11 constituting the alloy mold are removed, finished and polished.

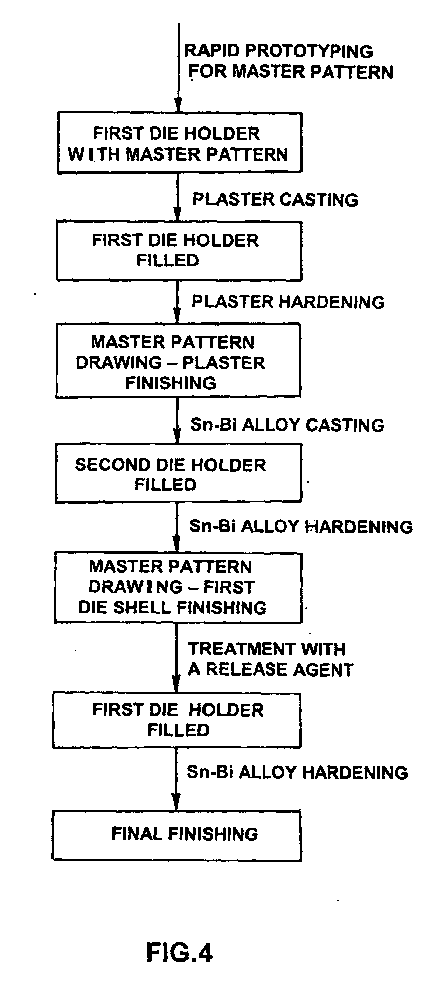

Said shells are ready to produce wax patterns. In Fig. 4, a block diagram resumes the abovedescribed process.

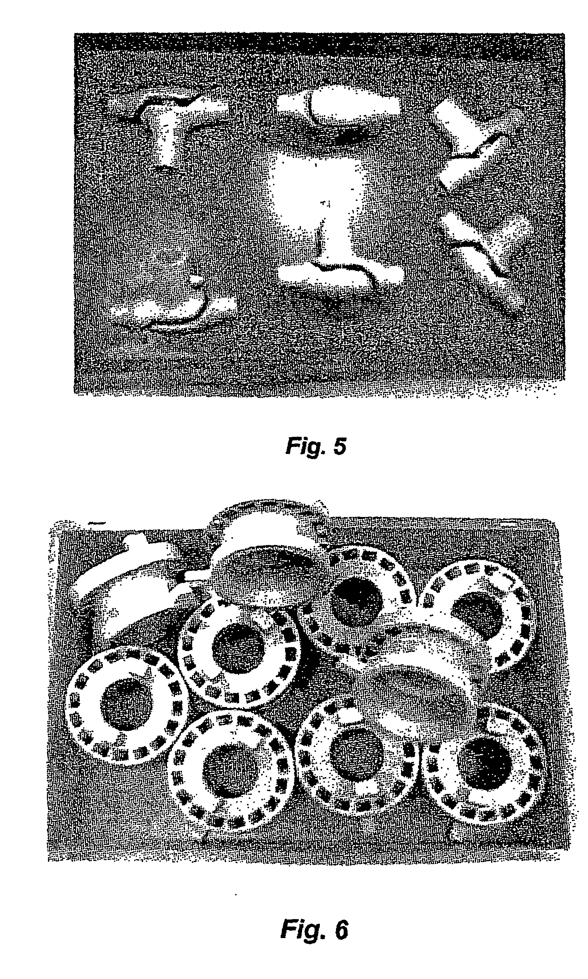

In Figs. 5 and 6 wax patterns of cryogenic valves and nozzles, ready for the manufacturing of manufacts by precision casting processes are depicted.

## Claims

1. The process for the manufacturing of molds for precision casting, die casting and the like, comprising the steps of:
* making a main pattern (3);
* providing a pair of die holder cavities (2, 6) apt to receive, in a overlapped condition, said main pattern;
* placing, in a first die holder cavity (2) of said pair of cavities, said main pattern (3) provided with suitable spacers (4);
* casting in said first cavity (2) a quantity of an easily removable material (5) and inducing the hardening thereof;
* overlapping to said first cavity (2) said second cavity (6) and casting, into the resulting space, a low-melting alloy (7) consisting of a Tin-Bismuth alloy with a melting point lower than 400°C, inducing the hardening thereof;
* separating said first and second cavity (2, 6), removing said easily removable material (5), treating the exposed surfaces (9) of the hardened alloy (8) with a release agent and overlapping again said die holder cavities (2, 6) therebetween;
* casting, into the resulting space, the low-melting alloy (10) and inducing the hardening thereof; and
* separating said die holder cavities (2, 6) and removing a pair of mold shells (8, 11) therefrom.

2. The process according to claim 1, wherein said main pattern (3) is obtained by a rapid prototyping technique.

3. The process according to claim 1 or 2, wherein said low-melting Tin-Bismuth alloy contains Tin ranging from 30 to 55% by weight, and Bismuth ranging from 70 to 45% by weight.

4. The process according to claim 2 or 3, wherein said alloy has a casting temperature ranging from 155 to 200°C.

5. The process according to claim 4, wherein said Sn-Bi alloy is eutectic with 57% by weight Bismuth and an eutectic point of 139°C.

6. The process according to any one of the claims 1 to 5, wherein said main pattern is made with stereolitography.

7. The process according to claim 6, wherein said main pattern is made of a resin having: a density ranging from 1.1 to 1.2 g/cm³ at 25°C; a glass transition temperature at 4°C/min of at least 50°C (DMA); and a heat deflection temperature at 0,46 MPa of at least 40°C (ASTM D 648).

8. The process according to claim 7, wherein said resin has a hardness lower than 50 Shore D.

9. The process according to any one of the claims 1 to 8, wherein the main pattern has dimensional tolerance values expressed as:
± 0.7% of the nominal size, for >15 mm reference heights; and
± 0.10 mm for <15 mm reference heights.

10. The process according to claims 1 to 9, wherein said easily removable material is plaster.

## Patentansprüche

1. Verfahren zum Herstellen von Formen zum Feingießen, Druckgießen u.dgl., beinhaltend die Schritte:
- Herstellen eines Hauptmodells (3);
- Bereitstellen von einem Paar Werkzeughalterhohlräumen (2, 6) die dafür ausgebildet sind, in aufeinandergesetztem Zustand das Hauptmodell aufzunehmen;
- Platzieren des Hauptmodells (3), das mit geeigneten Distanzstücken (4) versehen wird, in einem ersten Werkzeughalterhohlraum (2) des Paares von Hohlräumen;
- Gießen einer Menge eines leicht entfernbaren Materials (5) in den ersten Hohlraum (2) und Bewirken des Härtens desselben;
- Aufeinandersetzen des ersten Hohlraums (2) und des zweiten Hohlraums (6) und Gießen einer niedrig schmelzenden Legierung (7) in den sich ergebenden Raum, die aus einer Zinnwismutlegierung besteht, deren Schmelzpunkt niedriger als 400 °C ist, und Bewirken des Härtens derselben;
- Trennen des ersten und des zweiten Hohlraums (2, 6), Entfernen des leicht entfernbaren Materials (5), Behandeln der freiliegenden Oberflächen (9) der gehärteten Legierung (8) mit einem Trennmittel und erneutes Aufeinandersetzen der Werkzeughalterhohlräume (2, 6);
- Gießen der niedrig schmelzenden Legierung (10) in den resultierenden Raum und Bewirken des Härtens derselben; und
- Trennen der Werkzeughalterhohlräume (2, 6) und Entnehmen von einem Paar Formschalen (8, 11) aus denselben.

2. Verfahren nach Anspruch 1, wobei das Hauptmodell (3) durch eine schnelle Vorserientechnik gewonnen wird.

3. Verfahren nach Anspruch 1 oder 2, wobei die niedrig schmelzende Zinnwismutlegierung Zinn in einem Bereich von 30 bis 55 Gew.-% und Wismut in einem Bereich von 70 bis 45 Gew.-% enthält.

4. Verfahren nach Anspruch 2 oder 3, wobei die Legierung eine Gießtemperatur in einem Bereich von 155 bis 200 °C hat.

5. Verfahren nach Anspruch 4, wobei die Sn-Bi-Legierung mit 57 Gew.-% Wismut eutektisch ist und einen eutektischen Punkt von 139 °C hat.

6. Verfahren nach einem der Ansprüche 1 bis 5, wobei das Modell mit Stereolitographie hergestellt wird.

7. Verfahren nach Anspruch 6, wobei das Hauptmodell aus einem Harz hergestellt wird mit einer Dichte, die von 1,1 bis 1,2 g/cm³ bei 25 °C reicht; einer Glasübergangstemperatur bei 4 °C/min von wenigstens 50 °C (DMA); und einer Wärmestandfestigkeit bei 0,46 MPa von wenigstens 40 °C (ASTM D 648).

8. Verfahren nach Anspruch 7, wobei das Harz eine Härte hat, die niedriger als 50 Shore D ist.

9. Verfahren nach einem der Ansprüche 1 bis 8, wobei das Hauptmodell Abmessungstoleranzwerte hat, ausgedrückt als:
± 0,7 % der nominellen Größe für > 15 mm Referenzhöhen; und
± 0,10 mm für < 15 mm Referenzhöhen.

10. Verfahren nach den Ansprüchen 1 bis 9, wobei das leicht entfembare Material Gips ist.

## Revendications

1. Procédé de fabrication de moules pour le moulage de précision, le moulage sous pression et analogue, comportant les étapes consistant à :
- fabriquer un modèle principal (3) ;
- créer une paire de cavités de support de matrice (2, 6) aptes à recevoir, dans un état de recouvrement, ledit modèle principal ;
- placer, dans une première cavité de support de matrice (2) de ladite paire de cavités, ledit modèle principal (3) muni d'éléments d'espacement adaptés (4) ;
- couler dans ladite première cavité (2) une quantité de matière pouvant être facilement enlevée (5) et provoquer le durcissement de celle-ci ;
- recouvrir ladite première cavité (2) de ladite seconde cavité (6) et couler dans l'espace résultant, un alliage à point de fusion modéré (7) constitué d'un alliage étain-bismuth ayant un point de fusion inférieur à 400 °C, provoquant le durcissement de celui-ci ;
- séparer lesdites première et seconde cavités (2, 6), retirer ladite matière pouvant être facilement enlevée (5), traiter les surfaces exposées (9) de l'alliage durci (8) à l'aide d'un agent de démoulage et mettre de nouveau en recouvrement lesdites cavités de support de matrice (2, 6) entre elles ;
- couler, dans l'espace résultant, l'alliage à point de fusion modéré (10) et provoquer le durcissement de celui-ci ; et
- séparer lesdites cavités de support de matrice (2, 6) et enlever une paire de coquilles de moules (8, 11) de celles-ci.

2. Procédé selon la revendication 1, dans lequel ledit modèle principal (3) est obtenu par une technique de prototypage rapide.

3. Procédé selon la revendication 1 ou 2, dans lequel ledit alliage étain-bismuth à point de fusion modéré contient de l'étain allant de 30 à 55 % en poids et du bismuth allant de 70 à 45 % en poids.

4. Procédé selon la revendication 2 ou 3, dans lequel ledit alliage a une température de coulée allant de 155 à 200 °C.

5. Procédé selon la revendication 4, dans lequel ledit alliage Sn-Bi est eutectique avec 57 % en poids de bismuth et un point eutectique de 139 °C.

6. Procédé selon l'une quelconque des revendications 1 à 5, dans lequel ledit modèle principal est fabriqué par stéréolithographie.

7. Procédé selon la revendication 6, dans lequel ledit modèle principal est constitué d'une résine ayant : une densité allant de 1,1 à 1,2 g/cm³ à 25 °C ; une température de transition vitreuse à 4 °C/min d'au moins 50 °C (DMA) ; et une température de déformation à chaud à 0,46 MPa d'au moins 40 °C (ASTM D 648).

8. Procédé selon la revendication 7, dans lequel ladite résine a une dureté inférieure à 50 Shore D.

9. Procédé selon l'une quelconque des revendications 1 à 8, dans lequel le modèle principal a des valeurs de tolérance dimensionnelle exprimées de la manière suivante :
± 0,7 % de la taille nominale pour des hauteurs de référence > 15 mm ; et
± 0,10 mm pour des hauteurs de référence < 15 mm.

10. Procédé selon l'une quelconque des revendications 1 à 9, dans lequel ladite matière pouvant être facilement enlevée est un plâtre.
